# EUROPEAN PATENT APPLICATION

(11) **EP 2 770 418 A1**
(43) Date of publication of application: **27.08.2014**
(21) Application number: 14152178.1
(22) Date of filing: 22.01.2014
(51) Int. Cl.: G06F 3/0488, G06F 3/041

(54) **Electronic apparatus comprising a touch screen and method of controlling the same**

(30) Priority: 25.02.2013 US 201361768713 P; 08.05.2013 KR 20130052087
(71) Applicant: Samsung Electronics Co., Ltd, Gyeonggi-do 443-742 (KR)
(72) Inventor: Park, Jea-woo, Gyeonggi-do (KR)
(74) Representative: Taor, Simon Edward William

(57) **Abstract**

An electronic apparatus includes a user interface (UI) which displays a first screen on the touch screen, a sensor which senses a grip of a user on the touch screen, and a controller which, if the grip of the user on the touch screen is sensed, controls to display a second screen having a non-screen area.

## Description

The present general inventive concept generally relates to an electronic apparatus, a method of controlling the same, and a computer-readable recording medium, and more particularly, to an electronic apparatus which, if a grip of a user on the electronic apparatus is sensed, displays a non-screen area to prevent a touch error caused by the grip of the user, a method of controlling the same, and a computer-readable recording medium.

A notebook personal computer (PC) refers to a computer that is easy to carry. Therefore, a person carries and uses the notebook PC with moving. A slate PC and a tablet PC, which include touch screens to omit keyboard input parts in order to further improve mobility, have been widely used.

A bezel is disposed around a touch screen. If a size of the bezel is wide, a size of an area displaying an image becomes smaller than a total size of an electronic apparatus. Due to this, a size of a bezel has been reduced.

However, if the size of the bezel is reduced, and a user grips (or grabs) an electronic apparatus, a hand of the user may contact an area of a touch screen. Therefore, a touch error may occur. Accordingly, there is required a method of preventing a touch error from occurring due to a grip of a user even if a size of a bezel is reduced.

The exemplary embodiments provide an electronic apparatus which, if a grip of a user on the electronic apparatus is sensed, displays a non-screen area to prevent a touch error caused by the grip of the user, a method of controlling the same, and a computer-readable recording medium.

Additional features and utilities of the present general inventive concept will be set forth in part in the description which follows and, in part, will be obvious from the description, or may be learned by practice of the general inventive concept.

The foregoing and/or other features and utilities of the present general inventive concept may be achieved by providing an electronic apparatus including a touch screen. The electronic apparatus may include a user interface (UI) which displays a first screen on the touch screen, a sensor which senses a grip of a user on the touch screen, and a controller which, if the grip of the user on the touch screen is sensed, controls to display a second screen having a non-screen area.

The second screen may include a second screen area that has a smaller size than the first screen and a non-screen area that is disposed around the second screen area.

The controller may control the UI to display a second screen that includes a second screen area, a horizontal length of which is reduced more than a size of the first screen, and a non-screen area which is disposed on left and right sides of the second screen area.

The controller may control the UI to display a second screen that includes a second screen area, horizontal and vertical lengths of which are reduced more than the size of the first screen at a preset ratio, and a non-screen area which is disposed around the second screen area.

If a touch on the non-screen area is input, the controller may process the touch on the non-screen area as a touch performed by a misoperation.

The sensor may include a touch sensor that is disposed on a back side of the touch screen and senses the grip of the user on the touch screen according to whether the touch sensor operates.

The electronic apparatus may further include a button which receives a user control command. The sensor may sense the grip of the user on the touch screen according to whether the button operates.

If a touch on a preset area of the first screen is input for a preset time or more, the sensor may sense the touch on the preset area as the grip of the user on the touch screen.

The UI may receive a display command with respect to the non-screen area, and the sensor may sense the grip of the user on the touch screen according to the display command with respect to the non-screen area.

The sensor may sense a display direction with respect to the user of the touch screen, and the controller may control the UI to display the non-screen area in a position corresponding to the sensed display direction.

The electronic apparatus may be connected to a docking apparatus and, if the electronic apparatus is connected to the docking apparatus, the electronic apparatus may control the sensor to inactivate an operation of the sensor.

The foregoing and/or other features and utilities of the present general inventive concept may also be achieved by providing a method of controlling an electronic apparatus. The method may include displaying a first screen on a touch screen, sensing a grip of a user on the touch screen, and if the grip of the user on the touch screen is sensed, displaying a second screen having a non-screen area.

The second screen may include a second screen area that has a smaller size than a size of the first screen and a non-screen area that is disposed around the second screen area.

A second screen, which includes a second screen area, a horizontal length of which is reduced more than the size of the first screen and a non-screen area which is disposed on left and right sides of the second screen area, may be displayed.

A second screen, which includes a second screen area, horizontal and vertical lengths of which are reduced more than the size of the first screen at a preset ratio, and a non-screen area which is disposed around the second screen area, is displayed.

The method may further include: if a touch on the non-screen area is input, processing the touch on the non-screen area as a touch performed by a misoperation.

The grip of the user on the touch screen may be sensed by using a touch sensor that is disposed on a back side of the touch screen.

The grip of the user on the touch sensor may be sensed according to whether a button receiving a user control command operates.

If a touch on a preset area of the first screen is input for a preset time or more, the touch may be sensed as the grip of the user on the touch screen.

The grip of the user on the touch screen may be sensed according to a display command with respect to the non-screen area.

The method may further include: sensing a display direction with respect to the user of the touch screen. The second screen having the non-screen area disposed in a position corresponding to the sensed display direction may be displayed.

The method may further include: if the electronic apparatus is connected to a docking apparatus, controlling the sensor to inactivate an operation of the sensor.

The foregoing and/or other features and utilities of the present general inventive concept may also be achieved by providing a computer-readable recording medium to contain computer-readable medium as a program to execute the method described above or hereinafter.

The foregoing and/or other features and utilities of the present general inventive concept may also be achieved by providing an electronic apparatus comprising a housing with a touch screen, the electronic apparatus including a user interface unit to display a first screen having a first screen area on the touch screen; and a controller to control the user interface unit to change the first screen to a second screen having a second screen area and a non-screen area on the touch screen according to a user contact on a predetermined portion of the housing.

The user contact on the predetermined portion of the housing may include at least one of a user contact on a side portion of the first screen, a user contact on one icon corresponding to the user interface to selectively display one of the first screen and the second screen, a user contact on a button to control the user interface to selectively display one of the first screen and the second screen, a user contact on a sensor formed on the housing, and a user gesture sensed by the housing.

The non-screen area may be a portion of the touch screen to correspond to a portion of the first screen.

The second screen having the non-screen area may not be replaced with the first screen according to another user touch on the non-screen area.

The second screen may be changed to the first screen according to another user contact on the predetermined portion of the housing.

The second screen may be changed to the first screen according to another user contact on another predetermined portion of the housing.

The first screen and the second screen may include an image with a first size and a second size, respectively.

The first screen and the second screen may include an image with a first resolution and a second resolution, respectively.

The non-screen area may include one of one or more side areas of the second screen area, an area surrounding the second screen area, and an area disposed on a side of the second screen area. The non-screen area of the second screen may not be included in the first screen.

The predetermined portion and the non-screen area may be disposed on a same side of the housing with respect to a center of the touch panel.

The housing may include a first side and a second side, and the predetermined portion and the non-screen area may be disposed on one of the first side and the second side.

The housing may include a first side and a second side, and the predetermined portion and the non-screen area may be disposed on different sides.

According to an aspect of the invention, there is provided an electronic apparatus as set out in claim 1. Preferred features of this aspect are set out in claims 2 to 11.

According to an aspect of the invention, there is provided a method of controlling an electronic apparatus as set out in claim 12. Preferred features of this aspect are set out in claims 13 to 15.

These and/or other features and utilities of the present general inventive concept will become apparent and more readily appreciated from the following description of the embodiments, taken in conjunction with the accompanying drawings of which:
FIG. 1 is a view illustrating an electronic system according to an exemplary embodiment of the present general inventive concept;
FIG. 2 is a block diagram illustrating a structure of an electronic apparatus of FIG. 1;
FIG. 3 is a view illustrating a grip form of a user on an electronic apparatus, according to an exemplary embodiment of the present general inventive concept;
FIGS. 4A through 5 are views illustrating virtual bezels according to exemplary embodiments of the present general inventive concept;
FIG. 6 is a block diagram illustrating a sensing operation according to an exemplary embodiment of the present general inventive concept;
FIGS. 7 and 8 are views illustrating a sensing operation according to another exemplary embodiment of the present general inventive concept;
FIGS. 9 and 10 are views illustrating a sensing operation according to another exemplary embodiment of the present general inventive concept;
FIGS. 11A and 12 are views illustrating a sensing operation according to another exemplary embodiment of the present general inventive concept;
FIG. 13 is a flowchart briefly illustrating a method of controlling an electronic apparatus according to an exemplary embodiment of the present general inventive concept; and
FIG. 14 is a flowchart concretely illustrating a method of controlling an electronic apparatus according to an exemplary embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

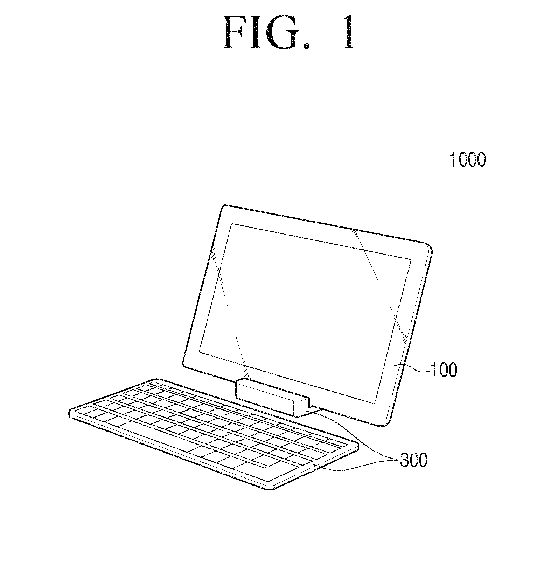

FIG. 1 is a view illustrating an electronic system 1000 according to an exemplary embodiment of the present general inventive concept.

Referring to FIG. 1, the electronic system 1000 includes an electronic apparatus 100 and a docking apparatus 300.

The electronic apparatus 100 receives a driving command from a user and performs a job according to the driving command. The electronic apparatus 100 may have components to perform the job, receive power from an external power source, and have a battery to store power received from an external power source and provide a power supply to the corresponding components. The job may include receiving data from an external device, processing data, generating audio or visual data as sound or an image, transmitting data to an external device, storing data therein, communicating with an external device through wired or wireless method, etc. The electronic apparatus 100 may also be physically/electrically connected to the docking apparatus 300. The electronic apparatus 100 may be a PC, a notebook PC, a smart phone, a tablet computer apparatus, a portable multimedia player (PMP), an MPEG audio layer-3 (MP3) player, or the like.

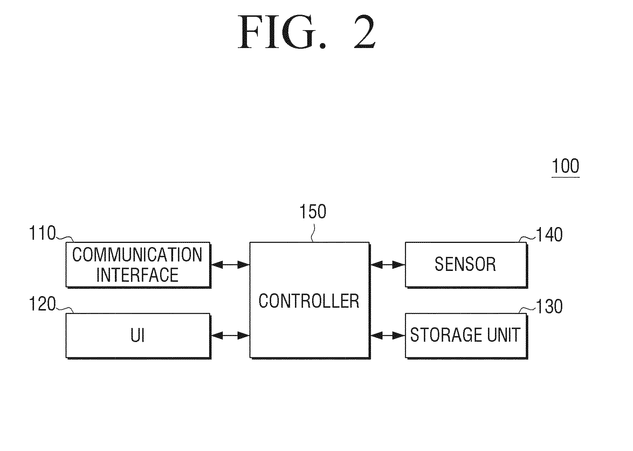

The electronic apparatus 100 senses a grip of a user to display a screen having a non-screen area. Here, the non-screen area refers to an area that is not handled as a touch input although a touch of the user is input. The non-screen area may be referred to as a virtual bezel area or an inactive area. Detailed structure and operation of the electronic apparatus 100 will be described later with reference to FIG. 2.

The docking apparatus 300 extends a function of the electronic apparatus 100. The docking apparatus 300 does not autonomously operate by itself and may operate if the electronic apparatus 100 is installed in the docking apparatus 300. In detail, the docking apparatus 300 may extend a user interface (UI) function of the electronic apparatus 100. For example, the docking apparatus may extend an input function by using a keyboard, a touch pad, or the like installed therein and may extend a display function through an external display apparatus (not illustrated) connected to the docking apparatus 300.

The docking apparatus 300 may include a graphic processing unit (GPI) to extend a graphic processing function of the electronic apparatus 100. The docking apparatus 300 may supply power to the electronic apparatus 100. The docking apparatus 300 may have a storage unit as an additional storage space of the electronic apparatus 100. In the present exemplary embodiment, the docking apparatus 300 is assumed as a docking apparatus that does not autonomously operate. However, the docking apparatus 300 may be realized as an apparatus that autonomously operates. That is, although the docking apparatus 300 may operate when being connected to an external device, it is possible that the docking apparatus may operate according to an external command through a user input unit formed therein. In this case, the docking apparatus may have one or more units configured to receive a user input, process the received user input, and output the processed result. The docking apparatus 300 may include a keyboard and/or a mouse usable as an input device to input a user command to the electronic apparatus 100.

FIG. 2 is a block diagram illustrating the electronic apparatus 100 of FIG. 1 according to an exemplary embodiment of the present general inventive concept.

Referring to FIG. 2, the electronic apparatus 100 includes a communication interface unit 110, a user interface (UI) unit 120, a storage unit 130, a sensor 140, and a controller 150.

The electronic apparatus 100 has a plurality of operation modes. The plurality of operation modes may be classified into a normal mode in which the electronic apparatus 100 performs a normal operation according to an operation state thereof and a sleep mode in which power supplied to one or more predetermined modules is shut off or minimized to minimize consumed power.

Here, the sleep mode refers to an operation mode in which a system does not perform any job or the power supply to one or more modules is shut off or minimized to minimize power consumed when a user does not input a job command for a predetermined time. In the sleep mode, power supplied to a main memory (in general, an external dynamic random access memory (DRAM)) may be shut off, or the main memory may be self-refreshed.

Although the electronic apparatus 100 is illustrated to perform a sleep mode in the present exemplary embodiment, it is possible that the electronic apparatus 100 may have a plurality of sleep modes. The plurality of sleep modes may include a power off mode to shut off power supplied to all elements of the electronic apparatus 100. The sleep mode includes the power off mode in the present exemplary embodiment, but the power off mode and the sleep mode may be separated from each other.

The plurality of modes may be classified into a tablet mode and a desk mode. In the table mode, the electronic apparatus 100 performs an operation when the electronic apparatus 100 is not connected to the docking apparatus 300, according to a connection or a disconnection to the docking apparatus 300. In the desk mode, the electronic apparatus 100 performs an operation when the electronic apparatus 100 is connected to the docking apparatus 300.

Here, in the tablet mode, the electronic apparatus 100 is not connected to the docking apparatus 300, i.e., the user uses the electronic apparatus 100 while carrying or holding the electronic apparatus 100, and thus the user may grip (touch or contact) a touch screen. Therefore, in the tablet mode, the electronic apparatus 100 senses the grip of the user on the touch screen, and if the grip of the user is sensed, a non-screen area is displayed.

In the desk mode, the electronic apparatus 100 is connected to the docking apparatus 300, i.e., the electronic apparatus 100 operates in a fixed position with respect to the docking apparatus 300, and thus the user may not grip the electronic apparatus 100. Therefore, in the desk mode, a sensing operation as described above may be disabled. However, it is possible that when the electronic apparatus 100 is changed from the desk mode to the tablet mode, the sensing operation of the electronic apparatus 100 may be enabled regardless of a connection state between the electronic apparatus 100 and the docking apparatus 300.

Also, the plurality of operation modes may be classified into a transverse display mode and a longitudinal display mode according to a display direction of the touch screen with respect to the user. Here, the transverse display mode is referred to as a mode in which a major axis of the touch screen is disposed parallel to a horizontal direction (or perpendicular to a vertical direction) based on the user to display a normal screen. The longitudinal display mode refers to a mode in which the major axis of the touch screen is disposed parallel to a vertical direction based on the user to rotate a display direction of the normal screen at 90° to the left or to the right in order to display the normal screen. The major axis of the touch screen may be a longitudinal direction of the touch screen or a direction to display an image on the touch screen. It is possible that the major axis may be a reference axis set by a user with respect to the touch screen to display an image thereon.

The communication interface unit 110 is formed to connect the electronic apparatus 100 to an external apparatus (not illustrated) through a local area network (LAN) and the Internet or through a wireless communication method (for example, Global System/Standard for Mobile Communication (GSM), a Universal Mobile Telephone System (UMTS), Long Term Evolution (LTE), WiBro, or the like). The communication interface unit 110 also communicates with the docking apparatus 300. In detail, when the electronic apparatus 100 is connected to the docking apparatus 300, the communication interface unit 110 receives a user control command from the docking apparatus 300 and transmits an image (or a moving picture), which is to be displayed, to the docking apparatus 300. The communication interface unit 110 may be connected to the external apparatus or the Internet through the docking apparatus 300.

The UI unit 120 includes a touch screen, receives selections of various types of functions supported in the electronic apparatus 100, and displays various types of information provided in the electronic apparatus 100. The UI unit 120 is illustrated to include the touch screen in the present exemplary embodiment. However, the UI unit 120 may further include various types of input devices (for example, various types of physical buttons) and various types of output devices (for example, a light-emitting diode (LED), etc.) besides the touch screen.

The UI unit 120 receives information about a grip state of the user on the touch screen. In detail, in this embodiment, the UI unit 120 receives the information about the grip state of the user on the touch screen through an additional physical button 121 or may receive the information about the grip state of the user on the touch screen through driving of a particular application program (i.e., a control command on the touch screen). Here, the physical button 121 may be an exclusive button for receiving only the information about the grip state of the user on the touch screen or a button (for example, a power button, a volume button, or a display mode change mode) that performs other functions with receiving of the information about the grip state of the user on the touch screen.

The UI unit 120 varies and displays a screen according to the grip state of the user. In detail, if it is determined that the user has not sensed the touch screen, according to a sensing result of the sensor 140 that will be described later, the UI unit 120 displays a first screen (or a first UI window) having a preset first screen size on the touch screen. Here, the preset first screen size may be a size of a whole area of the touch screen, i.e., a maximum resolution supported by the touch screen or a resolution preset by the user.

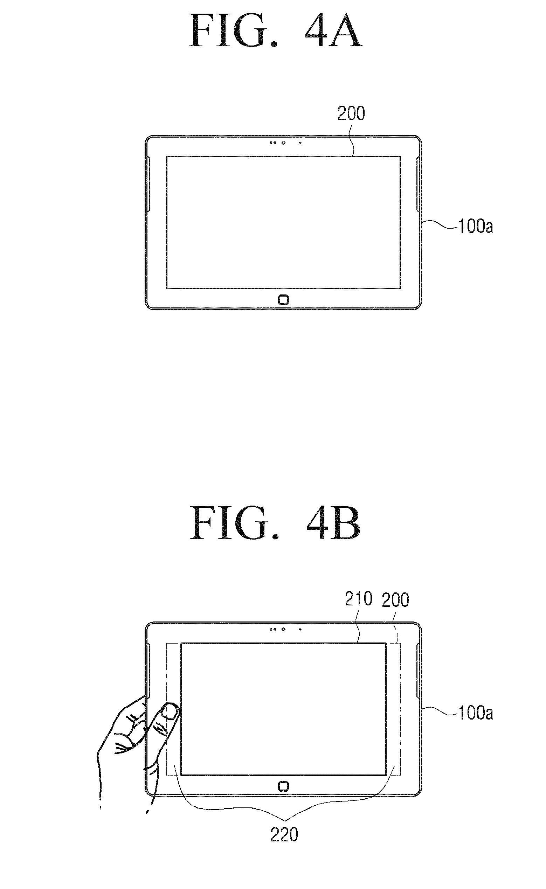

If it is determined that the user has sensed the touch screen, according to the sensing result of the sensor 140, the UI unit 120 displays a second screen (or a second UI window) having a non-screen area on the touch screen. Here, the second screen includes a second screen area having a smaller size than the first screen size and a non-screen area disposed around the second screen area. An example of the second screen will be described later with reference to FIGS. 4A through 5.

The storage unit 130 stores a program for driving the electronic apparatus 100. In detail, the storage unit 130 stores a program that is a set of various types of commands necessary when driving the electronic apparatus 100. Here, the program includes an application program for providing a particular service and an operating program for driving the application program.

The storage unit 130 may be realized as a storage medium of the electronic apparatus 100 or an external storage medium, for example, may be realized as a removable disk including a universal serial bus (USB) memory, a web server through a network, or the like.

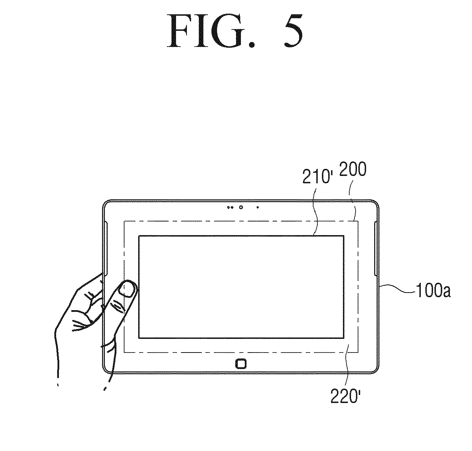

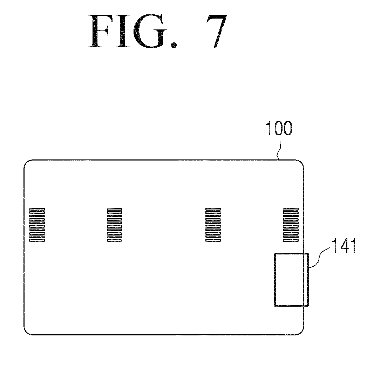

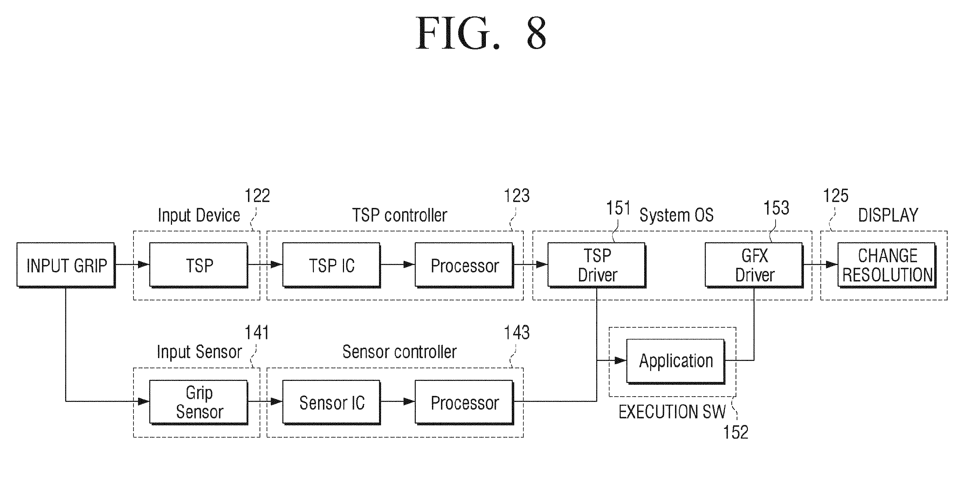

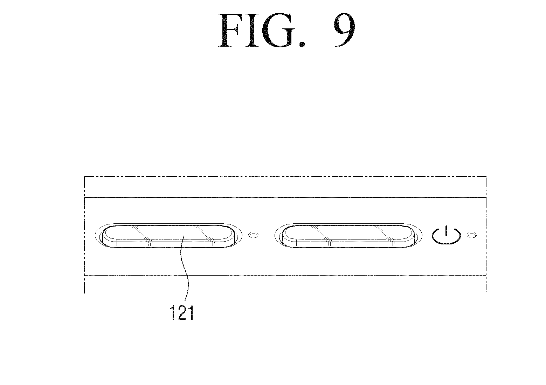

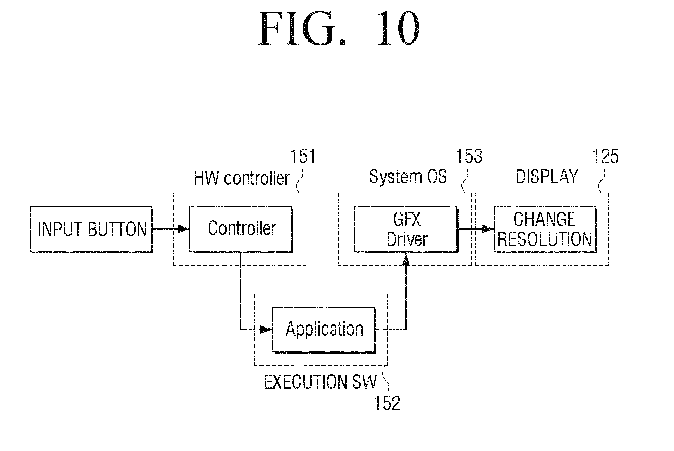

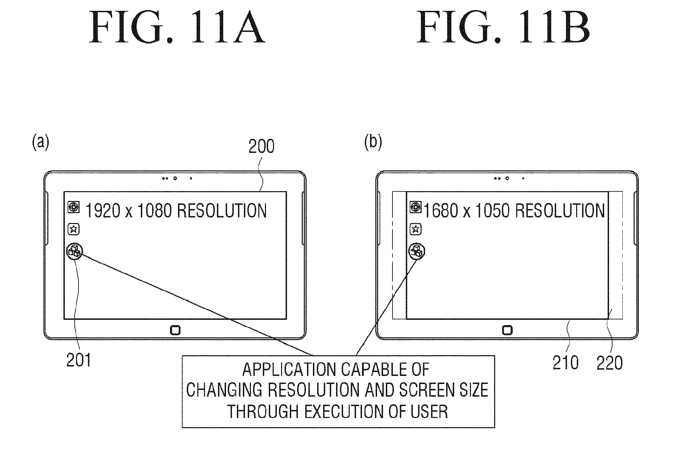

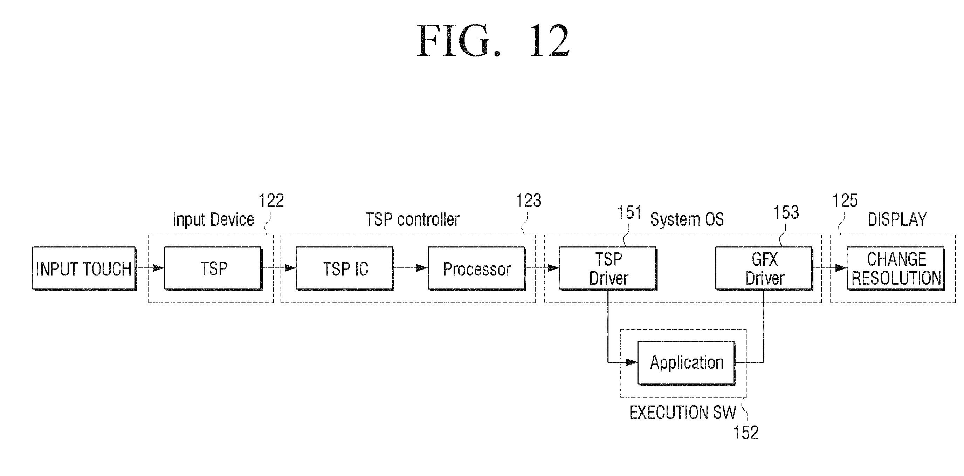

The sensor 140 senses the grip of the user on the touch screen. In detail, the grip of the user on the touch screen may be sensed by using various types of methods. A method of sensing the grip of the user by using a touch of the user on the touch screen will be described later with reference to FIG. 5. A method of sensing the grip of the user by using an additional sensing apparatus will be described later with reference to FIGS. 7 and 8. A method of sensing the grip of the user by using a physical button will be described later with reference to FIGS. 9 and 10. A method of sensing the grip of the user by using an application program will be described later with reference to FIGS. 11 and 12.

The controller 150 controls elements of the electronic apparatus 100. In detail, the controller 150 senses whether the docking apparatus 300 is connected to the electronic apparatus 100. For example, the electronic apparatus 100 includes a connector that is physically/electrically connected to a connector of the docking apparatus 300. If the docking apparatus 300 is electrically connected to the connector, the controller 150 senses that the electronic apparatus 100 is connected to the docking apparatus 300. Alternatively, if adaptor power is input through the docking apparatus 300, the controller 150 may sense whether the docking apparatus 300 is connected to the electronic apparatus 100, according to whether the adaptor power is input.

The controller 150 determines an operation mode according to whether the docking apparatus 300 is connected to the electronic apparatus 100. In more detail, if the electronic apparatus 100 is connected to the docking apparatus 300, the controller 150 determines the operation mode of the electronic apparatus 100 as a desk mode. If the electronic apparatus 100 is not connected to the docking apparatus 300 or if the electronic apparatus 100 does not receive the adaptor power from the docking apparatus 300, the controller 150 determines the operation mode of the electronic apparatus 100 as a tablet mode.

The controller 150 determines a change of the operation mode of the electronic apparatus 100. In detail, if the connection of the docking apparatus 300 to the electronic apparatus 100 is sensed in the tablet mode as described above, the controller 150 determines a change of the operation mode of the electronic apparatus 100 into the desk mode. If the disconnection of the docking apparatus 300 from the electronic apparatus 100 is sensed in the desk mode or a disconnection command is input from the user, the controller 150 determines a change of the operation mode of the electronic apparatus 100 into the tablet mode.

If a preset condition is satisfied, the controller 150 changes a normal mode to a sleep mode. For example, a command may not be input for a preset time. However, present general inventive concept is not limited thereto. It is possible that various types of mode change events may occur.

If a preset condition is satisfied, the controller 150 changes the sleep mode to the normal mode. For example, if a control of a physical button occurs as described above, the controller 150 may change the sleep mode to the normal mode.

Here, if the operation mode of the electronic apparatus 100 is the tablet mode, the controller 150 controls the sensor 140 to sense the grip of the user. If the grip of the user is not sensed, the controller 150 controls the UI 120 to display a first screen. If the grip of the user is sensed, the controller 150 controls the UI 120 to display a second screen having a non-screen area. For example, if a resolution of 1920 x 1080 is changed to a resolution of 1680 x and 1050, and a scaling item is designated as a "center image option, a screen size is not increases to a screen, and an inactive area is formed around at least a portion of the screen. Therefore, a screen area is reduced

If a touch of the user on the non-screen area is sensed when the grip of the user is sensed, and thus the second screen having the non-screen area is displayed, the controller 150 may recognize the touch of the user on the non-screen area as a touch performed by the grip of the user and process the corresponding touch as a touch performed by a misoperation. The misoperation may be referred to as an unintended, unwanted, or inadvertent contact operation by the user. Also, the misoperation may be an inoperable input by a user. The non-screen area may be inactivated such that any input is not received or recognized. Also, any input though the non-screen area may be ignored or discarded such that a current operation is not affected by the input through the non-screen area. In other words, a user touch command with respect to the non-screen area may not be recognized as a control command.

As described above, if the grip of the user is sensed, the electronic apparatus 100 according to the present exemplary embodiment displays the non-screen area and does not use a touch of the user on the non-screen area so as to prevent the touch screen form being operated according to the grip of the user. Also, since the operation of the touch screen with respect to the grip of the user is prevented as described above, a bezel area is minimized to minimize a size of a smart device or to maximally extend a screen area of the smart device.

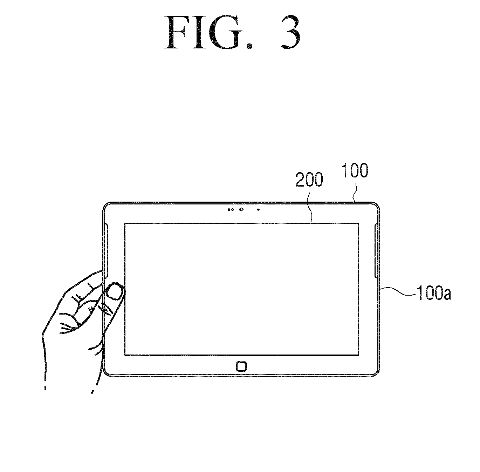

FIG. 3 is a view illustrating a grip form of a user on the electronic apparatus according to an exemplary embodiment of the present general inventive concept.

Referring to FIG. 3, when the user grips (holds or touches) the electronic apparatus 100, the user grips a bezel 100a of the electronic apparatus 100. A hand of the user contacts only a bezel area of the bezel 100a of the electronic apparatus 100 in the present exemplary embodiment. However, if a width of the bezel 100a of the electronic apparatus 100 is narrow or a user having big hands grips the electronic apparatus 100, a predetermined area of the hand of the user may contact a predetermined area of a touch screen 200.

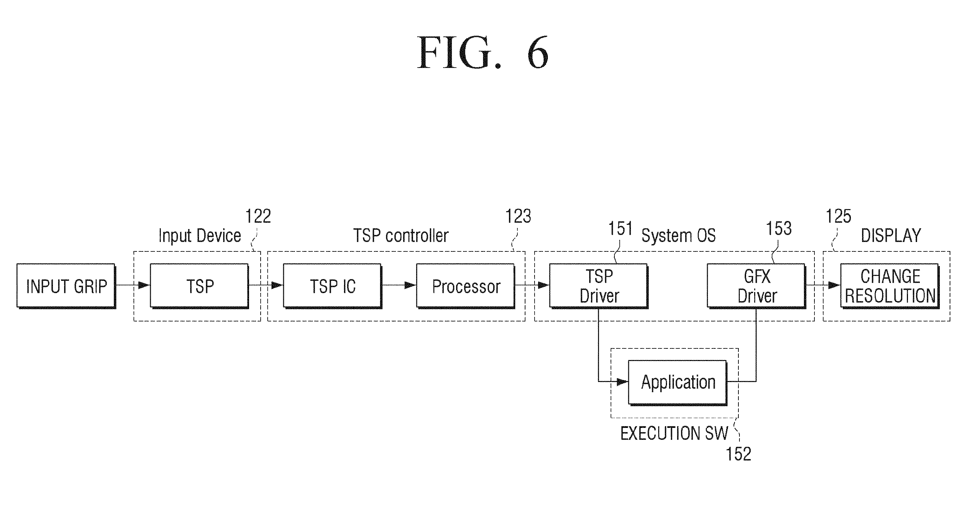

Therefore, in the present exemplary embodiment, if a grip of the user on the electronic apparatus 100 (in detail, a grip of the user on the touch screen 200) is sensed, a virtual panel area (or a non-screen area) is displayed on a screen. The non-screen area will now be described with reference to FIGS. 4A through 5. A method of sensing the grip of the user will be described later with reference to FIGS. 6 through 12.

FIGS. 4A through 5 are views illustrating screens with respect to a bezel 100a of the electronic apparatus 100 according to exemplary embodiments of the present general inventive concept.

Referring to FIG. 4A, a first screen 200 is displayed. In detail, the first screen 200 is a UI window having a preset first screen size. Here, the preset first screen size may correspond to a size of a whole area of a touch screen, i.e., may be a maximum resolution supported by the touch screen or a resolution set by a user. The touch screen may be referred to a touch screen defined by the bezel 100a to display an image thereon.

Referring to FIG. 4B, when a grip of the user is sensed, a second screen 200' is displayed. In detail, the second screen 200' includes a second screen area 210 having a smaller size than the size of the first screen and a non-screen area 220 disposed around the second screen area 210. In detail, the second screen area 200' includes the second screen area 210, a longitudinal direction of which is reduced more than that of the first screen, and the non-screen area 220 disposed on left and right sides of the second screen area 210. As described above, the electronic apparatus 100 according to the present exemplary embodiment disposes a non-screen area with respect to an area in which a grip of the user on the touch screen may occur. Therefore, an operation of the touch screen corresponding to a touch performed by the grip of the user on a portion of the touch screen may be prevented. Although FIG. 4A illustrates two sections of the non-screen area, it is possible that the non-screen area may have a single section to be disposed on one side, for example, a left side or right side, of the second screen area 210 of FIG. 4B corresponding to a side portion of the first screen 200 of FIG. 4A.

In the present exemplary embodiment, the non-screen area 220 is disposed on left and right sides of the second screen area 210. However, when the grip of the user occurs on an upper or lower part of a screen, a second screen may include a second screen area, a vertical length of which is reduced more than that of the first screen, and a non-screen area disposed above and underneath the second screen area. In other words, a non-screen area may be generated with respect to an area in which a grip of the user on the touch screen may occur. The non-screen area of the second screen may be variable with respect to the touch screen according to one of the transverse display mode and the longitudinal display mode.

A size (or an area) of the non-screen area may be set to default by a manufacturer and may be changed by setting of the user. For example, if the user has bigger hands than other person, the user may adjust the touch screen to have a greater non-screen area than a non-screen area having a default size. If the user has smaller hands than other person, the user may adjust the touch screen to have a smaller non-screen area than the non-screen area having the default size.

Referring to FIG. 5, when a grip of a user is sensed, a second screen 200' is displayed. In detail, the second screen 200' is a UI window that includes a second screen area 210', horizontal and vertical lengths of which are respectively reduced more than those of the first screen 200 at a preset ratio, and a non-screen area 220' disposed around the second screen area 210'. In the present exemplary embodiment, a second screen area may have the same ratio as that of a previous first screen in area, size, and/or shape. Therefore, a difference sensed by a user between the changed screens may be reduced.

In the present exemplary embodiment, if a grip of the user is sensed, a size of a screen displaying various types of information is reduced. However, the present general inventive concept is not limited thereto. It is possible that a resolution of the screen may be changed together with a change of the screen size. Also, it is possible that the second screen can be changed back to the first screen according to an operation (not illustrated) of a user as stated below. The operation may be a user touch on a predetermined area of the second screen, an icon displayed on the second screen, a sensor disposed on a housing of the electronic apparatus 100, or a button formed on the housing of the electronic apparatus 100.

FIG. 6 is a block diagram illustrating a sensing operation according to an exemplary embodiment of the present general inventive concept. In detail, the sensing operation according to the present exemplary embodiment is to sense a grip of a user only through an input of a touch screen without using an additional sensor.

Referring to FIG. 6, the electronic apparatus 100 includes a touch screen panel (TSP) 122, a TSP controller 123, a TSP driver 151, an application (or application unit) 152, a graphic (GFX) driver 153, and a display 125.

If a touch or a grip of a user is sensed, the TSP 122 generates an electrical signal with respect to an area that is touched or gripped by the user.

The TSP controller 123 converts the electrical signal generated by the TSP 122 into a digital signal to generate touch information and transmits the generated touch information to the TSP driver 151. The TSP controller 123 includes a TSP integrated circuit (IC) and a processor chip (for example, an extended platform controller hub (ex PCH) or accelerated processing unit (APU) of a system.

The TSP driver 151 receives the touch information from the TSP controller 123 and determines whether the grip of the user has occurred, based on the received touch information. In detail, if a signal corresponding to a touch on a preset area (for example, a non-screen area) of a first screen is input for a preset time or more, the TSP driver 151 determines that the input of the corresponding touch is a touch performed by the grip of the user.

If sensing formation indicating that the grip of the user has occurred is received from the TSP driver 152, the application 152 controls the graphic driver 153 to generate a second screen having a non-screen area to be displayed on the display 125.

The graphic driver 153 generates a screen (or a UI window) and provides the screen to the display 125. In detail, if the grip of the user is not sensed, the graphic driver 153 generates a first screen and provides the first screen to the display 125. If the grip of the user is sensed, the graphic driver 153 generates a second screen having a non-screen area and provides the second screen to the display 125.

The display 125 displays the screen provided from the graphic driver 153. The TSP 122 and the display 125 are separately installed in the present exemplary embodiment but may be realized as one apparatus. It is possible that the second screen has a resolution different from a resolution of the first screen.

As described with reference to FIG. 6, the TSP driver 151 determines whether the input of the touch is the touch performed by the grip of the user, according to the touch information. However, the TSC controller 123 may determine that the input of the touch is the touch performed by the grip of the user and transmit information indicating that the grip of the user has occurred, to the TSP driver 151. Also, the determination operation may be performed by the application 152.

FIGS. 7 and 8 are views illustrating a sensing operation of an electronic apparatus according to an exemplary embodiment of the present general inventive concept. In detail, the sensing operation according to the present exemplary embodiment is to sense a grip of a user by using a touch sensor. The electronic apparatus 100 of FIG. 1 may be useable as the electronic apparatus of FIGS. 7 and 8.

Referring to FIG. 7, a touch sensor 141 is disposed on a back side of the UI unit 120 (in more detail, on a back side of a touch screen). The UI unit 120 may have a housing with a front side and the back side. The touch screen may be disposed on the front side of the housing, and the touch sensor 141 may be disposed on the back side of the housing opposite to the front side. However, the present general inventive concept is not limited thereto. It is possible that the touch sensor 141 may be disposed on a side of the housing. The touch sensor 141 senses whether there is a contact of the user on a touch pad. In the present exemplary embodiment, only a touch pad is used. However, the present general inventive concept is not limited thereto. It is possible that any sensor that senses a touch of the user may be used.

As described with reference to FIG. 7, the touch sensor 141 is disposed on a side of the back side of the touch screen. However, the present general inventive concept is not limited thereto. It is possible that the touch sensor 141 may be disposed on both sides of the back side of the touch screen. Alternatively, the touch sensor 141 may be disposed in an upper area and/or a lower area of the touch screen.

Referring to FIG. 8, the touch screen 100 includes a TSP 122, a TSP controller 123, a TSP driver 151, an application (or application unit) 152, a graphic driver 153, a display 125, a touch sensor (or an input sensor) 141, and a sensor controller 143.

If a touch or a grip of a user is sensed, the TSP 122 generates an electrical signal with respect to a touched or gripped area.

The TSP controller 123 converts the electrical signal generated by the TSP 122 into a digital signal to generate touch information and transmits the touch information to the TSP driver 151. The TSP controller 123 includes a TSP IC and a processor chip (for example, an ex PCH or an APU) of a system.

The TSP driver 151 receives the touch information from the TSP controller 123 and determines whether a grip of the user has occurred, based on the received touch information.

If sensing information indicating that the grip of the user has occurred is received from the TSP driver 151 or information indicating that the grip of the user has occurred is received from the sensor controller 143, the application 152 controls the graphic driver 153 to display a second screen having a non-screen area on the display 125.

The graphic driver 153 generates a screen and provides the screen to the display 125. In detail, if the grip of the user is not sensed, the graphic driver 153 generates a first screen and provides the first screen to the display 125. If the grip of the user is sensed, the graphic driver 153 generates a second screen having a non-screen area and provides the second screen to the display 125.

The display 125 displays the screen provided from the graphic driver 153.

The touch sensor 141 may be disposed on a back side of a touch screen and may be a touch pad capable of sensing a touch of the user as illustrated in FIG. 7. If the touch of the user is sensed, the touch sensor 141 outputs a signal representing sensing information.

The sensor controller 143 analyzes a signal sensed by the touch sensor 141 and transmits the analyzed signal as the information to the application 152. The sensor controller 143 includes a sensor IC and a processor chip (for example, an ex MICOM, a PCH, or an APU) of a system.

In the present exemplary embodiment, the information is immediately transmitted from the sensor controller 143 to the application 152. However, the TSP driver 151 may receive and process the sensed sensor information from the sensor controller 143. The TSP driver 151 may send to the application 152 a signal representing both the sensing information of the TSP controller 123 and the information of the sensor controller 143.

FIGS. 9 and 10 are views illustrating a sensing operation according to an exemplary embodiment of the present general inventive concept. In detail, the sensing operation according to the present exemplary embodiment is to sense a grip of a user by using a physical button.

Referring to FIG. 9, a physical button 121 is disposed on a side of a housing of the electronic apparatus 100. A user presses the physical button 121 to input information about a grip state of a touch screen.

Referring to FIG. 10, the electronic apparatus 100 includes the physical button 121, a controller 151, an application (application unit) 152, a graphic driver 153, and a display 125.

The physical button 121 is operated by a control of the user.

If whether the physical button 121 has operated is sensed or the physical button 121 operates, the controller 151 transmits to the application 152 information indicating that the physical button 121 has operated.

If the application 152 receives from the controller 151 the information indicating that the physical button 121 has operated, the application 152 determines that the information has been received as information about a grip state of the user on the touch screen and controls the graphic driver 153 to display a second screen having a non-screen area on the display 125. If the application 152 receives the information indicating that the physical button 121 has operated when the second screen is displayed, the application 152 controls the graphic driver 153 to display a first screen on the display 125.

The graphic driver 153 generates a screen and provides the screen to the display 125. In detail, if the grip of the user is not sensed, the graphic driver 153 generates a first screen and provides the first screen to the display 125. If the grip of the user is sensed, the graphic driver 153 generates a second screen and provides the second screen to the display 125.

The display 125 displays the screen provided from the graphic driver 153.

FIGS. 11A through 12 are views illustrating a sensing operation according to an exemplary embodiment of the present general inventive concept. In detail, the sensing operation is to sense the grip of the user by using an application program.

Referring to FIG. 11A, a screen 200 displays an icon 201 indicating a particular application. If a user selects the icon 201, an application corresponding to the icon 201 is driven, and an operation of the present general inventive concept as described above, i.e., a second screen 220 having a non-screen area 210, is displayed as illustrated in FIG. 11B.

Referring to FIG. 11B, the second screen 220 may also have an icon 201 indicating a particular application. If the icon 201 is selected in this case, a first screen is displayed.

Referring to FIG. 12, the electronic apparatus 100 includes a TSP 122, a TSP controller 123, a TSP driver 151, an application (or application unit) 152, a graphic driver 153, and a display 125.

If a touch or a grip of a user is sensed through an icon as illustrated in FIGS. 11A and 11B, the TSP 122 generates an electrical signal with respect to a touched or gripped area.

The TSP controller 123 converts the electrical signal generated by the TSP 122 into a digital signal to generate touch information and transmits the touch information to the TSP driver 151. The TSP controller 123 includes a TSP IC and a processor chip (for example, an ex PCH or an APU) of a system.

The TSP driver 151 receives the touch information from the TSP controller 123 and, if the received touch information is a selection of a preset icon, drives an application program corresponding to the preset icon.

If the application program (i.e., the application 152) is driven, the TSP driver 151 controls the graphic driver 153 to display a second screen having a non-screen area on the display 125.

The graphic driver 153 generates a screen and provides the screen to the display 125. In detail, if the grip of the user is not sensed, the graphic driver 153 generates a first screen and provides the first screen to the display 125. If the grip of the user is sensed, the graphic driver 153 generates a second screen having a non-screen area and provides the second screen to the display 125.

The display 125 displays the screen provided from the graphic driver 153.

As illustrated in the above drawings, a number of types of methods of sensing a grip of a user have been described above. However, the types of methods may be usable separately or in combination in an electronic apparatus. For example, all sensing methods described in the above-described exemplary embodiments may be realized on the electronic apparatus 100.

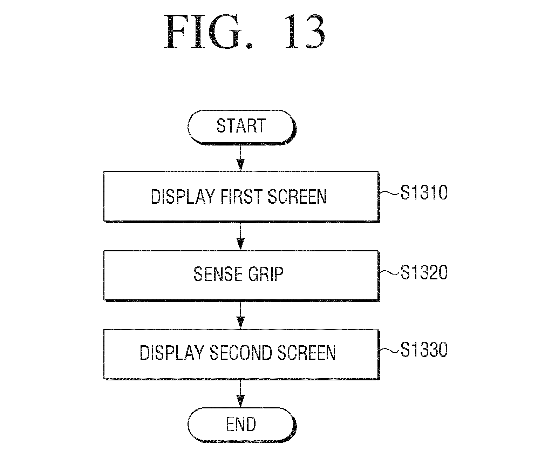

FIG. 13 is a flowchart illustrating a method of controlling an electronic apparatus according to an exemplary embodiment of the present general inventive concept.

Referring to FIG. 13, in operation S1310, a first screen having a preset first screen size and/or a preset first screen resolution is displayed on a touch screen. Here, the preset first screen size corresponds to a size of a whole area of the touch screen and may be a maximum resolution supported on the touch screen or a resolution set by a user.

In operation S1320, a grip of the user on the touch screen is sensed. In detail, the grip of the user may be sensed by using a touch of the user on the touch screen or an additional touch sensor. Alternatively, a user grip command may be input through a physical button or an application program to sense the grip of the user.

If the grip of the user on the touch screen is sensed in operation S1320, a second screen having a non-screen area is displayed in operation S1330. In detail, the second screen 200' includes a second screen area having a smaller size than the first screen size and a non-screen area disposed on at least one side or around the second screen area.

If a touch of the user on the non-screen area is sensed when the second screen having the non-screen area is displayed, the touch of the user on the non-screen area may be recognized as a touch performed by the grip of the user, and the corresponding touch may be processed as a touch performed by a misoperation.

In the above-described control method according to the present exemplary embodiment, if a grip of a user is sensed, a non-screen area is displayed, and a touch of the user on the non-screen area is not used as a user command. Therefore, any operation corresponding to a misoperation of a touch screen with respect to the grip of the user is prevented. The control method described with reference to FIG. 13 may be executed on an electronic apparatus having the structure of FIG. 2 or on other electronic apparatus having other types of structures.

Also, the above-described control method may be realized as a program (or an application) including a computer-executable algorithm. The program may be stored on a non-transitory computer-readable medium to be provided.

The non-transitory computer-readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

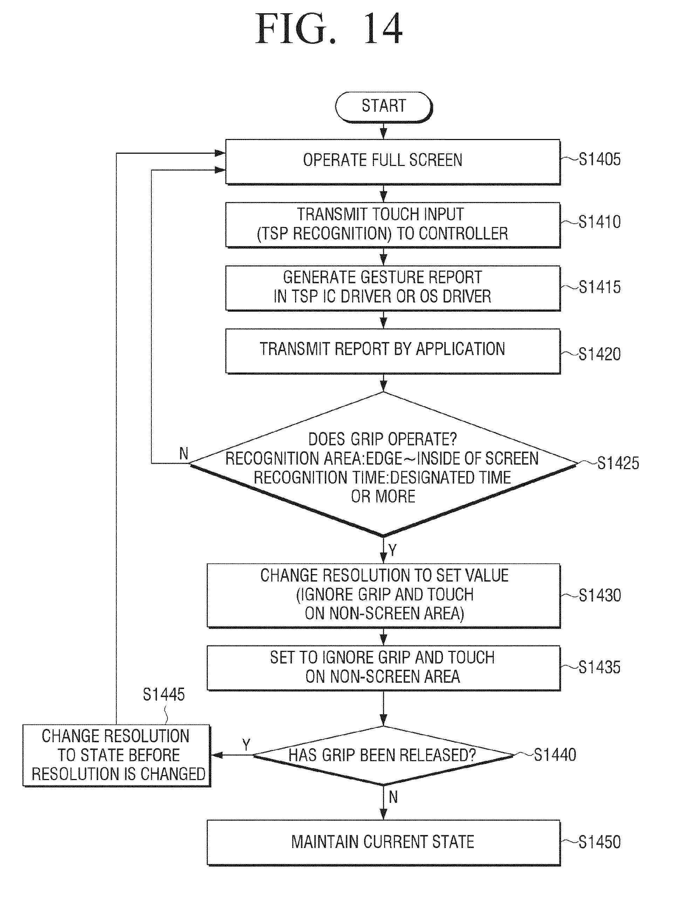

FIG. 14 is a flowchart illustrating a method of controlling an electronic apparatus according to an exemplary embodiment of the present general inventive concept.

Referring to FIG. 14, a screen (i.e., a first UI window) having a maximum screen (or a maximum resolution) is displayed in operation S1405.

If a touch on a touch screen is input, input touch information is transmitted to a touch controller in operation S1410. In operation S1415, the touch controller informs a TSP driver or an operating system (OS) driver that the touch has occurred, based on the input touch information. In operation S1420, the touch information is transmitted to an application (or application unit.

In operation S1425, a determination is made as to whether the input touch is a touch performed by a grip of a user on the electronic apparatus, based on the touch information. The touch information may be information corresponding to a recognition area, an inside of the screen, a recognition time and/or a designated time or more. If it is determined in operation S1425 that the touch is a touch performed by the grip of the user, a resolution of a display is changed so that a screen has a non-screen area in operation S1430.

If a touch on the non-screen area is input, the corresponding touch is set to be ignored in operation S1435.

In operation S1440, whether the grip of the user has been released is sensed. If the grip of the user is not released in operation S1440, a current state is maintained in operation S1450. If the grip of the user is released in operation S1440, the resolution of the display is changed to display a screen that does not have a non-screen area in operation S1445.

Embodiments of the invention can provide an electronic apparatus comprising a touch screen, the electronic apparatus comprising: a user interface (UI) arranged to display a first screen on the touch screen; a sensor arranged to sense a grip of a user on at least a portion of the touch screen; and a controller which, if the grip of the user on the touch screen is sensed, is arranged to control the user interface to display a second screen on the touch screen having a non-screen area.

In some embodiments, the first screen (or a first UI window) has a preset first screen size on the touch screen, and the second screen (or a second UI window) has a preset second screen size on the touch screen that is smaller than the first screen size, with a non-screen area in which no image is displayed at least partially bordering the second screen. In some embodiments, the second screen size may be smaller than the first screen size in two dimensions (in which the non-screen area may completely border the second screen). In other embodiments, the second screen size may be smaller than the first screen size in one dimensions (in which the non-screen area may partially border the second screen, e.g. only bordering two opposite sides of the second screen).

In some embodiments, the second screen has a resolution different from a resolution of the first screen.

In some embodiments , if a touch on the non-screen area is input, the controller is arranged to processes the touch on the non-screen area as a touch performed by a misoperation. In some embodiments, the misoperation may be referred to as an unintended, unwanted, or inadvertent contact operation by the user. Also, the misoperation may be an inoperable input by a user. In some embodiments, the misoperation can be an input that is not processed by the controller so as to provide a function (e.g. not provide a UI function).

Embodiments of the invention can provide a method of controlling an electronic apparatus, the method comprising: displaying a first screen on a touch screen; sensing a grip of a user on the touch screen; and if the grip of the user on the touch screen is sensed, displaying a second screen having a non-screen area on the touch screen.

In some embodiments, the second screen has a second screen area that is smaller than a size of the first screen, with a non-screen area that is disposed around the second screen area.

In some embodiments, the second screen, which comprises a second screen area, has a reduced horizontal length when compared to the first screen, with the non-screen area being disposed on left and right sides of the second screen area.

In some embodiments, the second screen, which comprises a second screen area, has reduced horizontal and vertical lengths when compared to the first screen, with the non-screen area being disposed around the second screen area. In some embodiments, the horizontal and vertical lengths of the second screen area are reduced at a preset ratio (e.g. the aspect ratio of the display) when compared to the first screen.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

## Claims

1. An electronic apparatus comprising a touch screen, the electronic apparatus comprising:
a user interface (UI) arranged to display a first screen on the touch screen;
a sensor arranged to sense a grip of a user on the touch screen; and
a controller which, if the grip of the user on the touch screen is sensed, is arranged to control to display a second screen having a non-screen area.

2. The electronic apparatus of claim 1, wherein the second screen comprises a second screen area that has a smaller size than the first screen and the non-screen area that is disposed around the second screen area.

3. The electronic apparatus of claim 1 or 2, wherein the controller is arranged to control the UI to display the second screen that comprises a second screen area, a horizontal length of which is reduced more than a size of the first screen, and a non-screen area which is disposed on left and right sides of the second screen area.

4. The electronic apparatus of claim 1 or 2, wherein the controller is arranged to control the UI to display the second screen that comprises a second screen area, horizontal and vertical lengths of which are reduced more than the size of the first screen at a preset ratio, and the non-screen area which is disposed around the second screen area.

5. The electronic apparatus of any one of claims 1 through 4, wherein if a touch on the non-screen area is input, the controller is arranged to process the touch on the non-screen area as a touch performed by a misoperation.

6. The electronic apparatus of any of claims 1 through 5, wherein the sensor comprises a touch sensor that is disposed on a back side of the touch screen and is arranged to sense the grip of the user on the touch screen according to whether the touch sensor operates.

7. The electronic apparatus of any one of claims 1 through 6, further comprising:
a button arranged to receive a user control command,
wherein the sensor is arranged to sense the grip of the user on the touch screen according to whether the button operates.

8. The electronic apparatus of any one of claims 1 through 7, wherein if a touch on a preset area of the first screen is input for a preset time or more, the sensor is arranged to sense the touch on the preset area as the grip of the user on the touch screen.

9. The electronic apparatus of any one of claims 1 through 8, wherein the UI is arranged to receive a display command with respect to the non-screen area, and the sensor is arranged to sense the grip of the user on the touch screen according to the display command with respect to the non-screen area.

10. The electronic apparatus of any one of claims 1 through 9, wherein the sensor is arranged to sense a display direction with respect to the user of the touch screen, and the controller is arranged to control the UI to display the non-screen area in a position corresponding to the sensed display direction.

11. The electronic apparatus of any one of claims 1 through 10, wherein the electronic apparatus is connected to a docking apparatus and, if the electronic apparatus is connected to the docking apparatus, the electronic apparatus is arranged to control the sensor to inactivate an operation of the sensor.

12. A method of controlling an electronic apparatus, the method comprising:
displaying a first screen on a touch screen;
sensing a grip of a user on the touch screen; and
if the grip of the user on the touch screen is sensed, displaying a second screen having a non-screen area.

13. The method of claim 12, wherein the second screen comprises a second screen area that has a smaller size than a size of the first screen and the non-screen area that is disposed around the second screen area.

14. The method of claim 12 or 13, wherein the second screen, which comprises a second screen area, a horizontal length of which is reduced more than the size of the first screen and the non-screen area which is disposed on left and right sides of the second screen area, is displayed.

15. The method of claim 12 or 13, wherein the second screen, which comprises a second screen area, horizontal and vertical lengths of which are reduced more than the size of the first screen at a preset ratio, and the non-screen area which is disposed around the second screen area, is displayed.
